# EUROPEAN PATENT APPLICATION

(11) **EP 4 620 918 A1**
(43) Date of publication of application: **24.09.2025**
(21) Application number: 25163605.6
(22) Date of filing: 13.03.2025
(51) Int. Cl.: C01G 53/05, C01G 53/506, C01G 53/84, H01M 4/00

(54) **METAL COMPOSITE COMPOUND AND METHOD OF PRODUCING POSITIVE ELECTRODE ACTIVE MATERIAL FOR LITHIUM SECONDARY BATTERY**

(30) Priority: 19.03.2024 JP 2024044159
(71) Applicant: Tanaka Chemical Corporation, Fukui-shi, Fukui 910-3131 (JP)
(72) Inventor: Kuroda, Tomoya, Fukui-shi, Fukui, 910-3131 (JP); Nakaya, Ayaka, Fukui-shi, Fukui, 910-3131 (JP)
(74) Representative: Vossius & Partner Patentanwälte Rechtsanwälte mbB

(57) **Abstract**

A metal composite compound is provided with which a lithium secondary battery having high initial charge and discharge efficiency can be produced.

A metal composite compound containing at least Ni, in which in the metal composite compound, when in a differential pore volume distribution determined by a Barrett-Joyner-Halenda method from a nitrogen gas adsorption isotherm, an integrated area of a region where a pore diameter is 1 nm or more and 50 nm or less is A, and an integrated area of a region where the pore diameter is more than 50 nm and 200 nm or less is B, A/B is 0.05 or more and less than 1.5.

## Description

### BACKGROUND OF THE INVENTION

### Field of the Invention

The present invention relates to a metal composite compound and a method of producing a positive electrode active material for a lithium secondary battery.

### Description of Related Art

A positive electrode active material contained in a positive electrode of a lithium secondary battery is obtained, for example, by mixing a lithium compound with a metal composite compound containing a metal element other than Li and calcining the mixture.

As a technology for improving the battery performance of a lithium secondary battery, an attempt has been made to control physical properties of a metal composite compound serving as a raw material for a positive electrode active material.

For example, Patent Document 1 discloses a method for producing a high-density hydroxide precursor as a metal composite compound and producing a lithium transition metal composite oxide using the precursor. In addition, Patent Document 1 discloses that the positive electrode active material produced using such a hydroxide precursor has a large discharge capacity (energy density) per volume.

### Citation List

### Patent Document

Patent Document 1: JP-B-7004959

### SUMMARY OF THE INVENTION

As the application fields of lithium secondary batteries expand, further improvement in initial charge and discharge efficiency is required.

An object of the present invention is to provide a metal composite compound with which a lithium secondary battery having high initial charge and discharge efficiency can be produced. Another object of the present invention is to provide a method of producing a positive electrode active material for a lithium secondary battery using the metal composite compound.

The present invention includes the following [1] to [8].
[1] A metal composite compound, containing: at least Ni, in which in the metal composite compound, when a differential pore volume distribution is determined by a Barrett-Joyner-Halenda method from a nitrogen gas adsorption isotherm, an integrated area of a region where a pore diameter is 1 nm or more and 50 nm or less is A, and an integrated area of a region where the pore diameter is more than 50 nm and 200 nm or less is B, A/B is 0.05 or more and less than 1.5.
[2] The metal composite compound according to [1], in which in the differential pore volume distribution, the metal composite compound has two or more maximum points in a region where the pore diameter is 20 nm or more and 150 nm or less.
[3] The metal composite compound according to [1] or [2], in which in the differential pore volume distribution, the metal composite compound has one or more maximum points in a region where the pore diameter is 20 nm or more and 50 nm or less, and has one or more maximum points in a region where the pore diameter is more than 50 nm and 200 nm or less.
[4] The metal composite compound according to any one of [1] to [3], in which a value X of a differential pore volume of a first maximum point, which has a maximum differential pore volume among maximum points present in the differential pore volume distribution, is 0.15 cm³/g or less.
[5] The metal composite compound according to any one of [1] to [4], in which X/Y, which is a ratio of a value X of a differential pore volume of a first maximum point, which has a maximum differential pore volume among maximum points present in the differential pore volume distribution, to a value Y of a differential pore volume of a second maximum point, which has the next largest differential pore volume after the first maximum point, is 7 or less.
[6] The metal composite compound according to any one of [1] to [5], represented by Formula (I),

   Ni_{(1-x-y)}M1ₓM2_{y}O_{z}(OH)_{2-α} ... (I)

   (in Formula (I), 0 ≤ x ≤ 0.8, 0 ≤ y ≤ 0.2, 0 ≤ x + y < 1, 0 ≤ z ≤ 3, -0.5 ≤ α ≤ 2, and α - z < 2, M1 is one or more elements selected from the group consisting of Co, Mn, and Al, and M2 is one or more elements selected from the group consisting of Fe, Cu, Ti, Mg, Zn, Sn, Zr, Nb, Ga, W, Mo, B, and Si).
[7] The metal composite compound according to [6], in which Formula (I) satisfies 0 < x + y ≤ 0.6.
[8] A method of producing a positive electrode active material for a lithium secondary battery, the method including: a step of calcining a mixture of the metal composite compound according to any one of [1] to [7] and a lithium compound.

According to the present invention, it is possible to obtain a metal composite compound with which a lithium secondary battery having high initial charge and discharge efficiency can be produced. In addition, it is possible to provide a method of producing a positive electrode active material for a lithium secondary battery using the metal composite compound.

### BRIEF DESCRIPTION OF THE DRAWINGS

FIG. 1 is a schematic view showing an example of a lithium secondary battery.
FIG. 2 is a schematic view showing an example of an all-solid-state lithium secondary battery.

### DETAILED DESCRIPTION OF THE INVENTION

In the present specification, a metal composite compound will be hereinafter referred to as "MCC", and a positive electrode active material for a lithium secondary battery will be hereinafter referred to as "CAM" as an abbreviation for a cathode active material for a lithium secondary battery.

"Ni" refers not to a nickel metal but to a nickel atom. Similarly, "Co", "Li", and the like also each refer to a cobalt atom, a lithium atom, or the like.

Lithium secondary battery refers to a lithium ion secondary battery.

In a case where the numerical range is described as, for example, "1 to 10 µm", the numerical range means a range from 1 µm to 10 µm, and means a numerical range including 1 µm as a lower limit value and 10 µm as an upper limit value.

### [Measurement of Initial Charge and Discharge Efficiency]

A lithium secondary battery is prepared by the following method, and the initial charge and discharge efficiency is measured.

### 1. Preparation of Lithium Secondary Battery

### (Preparation of CAM)

MCC and a lithium hydroxide monohydrate powder are weighed and mixed at a ratio at which a molar ratio of Li contained in the lithium hydroxide monohydrate powder to the total amount 1 of elements (for example, Ni, element M1 or element M2 described later) other than the oxygen atom contained in the MCC is 1.05 to obtain a mixture. The obtained mixture is calcined at 650°C for 5 hours in an oxygen atmosphere and then calcined at 750°C for 5 hours in an oxygen atmosphere to obtain CAM.

### (Preparation of Positive Electrode for Lithium Secondary Battery)

The obtained CAM, a conductive material (acetylene black), and a binder (PVdF) are added and kneaded in a composition ratio of CAM:conductive material:binder = 92:5:3 (mass ratio) to prepare a paste-like positive electrode material mixture. During the preparation of the positive electrode mixture, N-methyl-2-pyrrolidone is used as an organic solvent.

The obtained positive electrode mixture is applied to a 40 µm-thick Al foil serving as a current collector and dried in a vacuum at 150°C for 8 hours to obtain a positive electrode for a lithium secondary battery. An electrode area of the positive electrode for a lithium secondary battery is set to 1.65 cm².

### (Preparation of Lithium Secondary Battery)

The following operation is performed in a glove box under an argon atmosphere.

The positive electrode for a lithium secondary battery prepared in (Preparation of Positive Electrode for Lithium Secondary Battery) is placed on a lower lid of a part for a coin type battery R2032 (for example, manufactured by Hohsen Corp.) with an aluminum foil surface facing downward, and a separator (a porous layer made of polyethylene) is placed on the positive electrode for a lithium secondary battery. An electrolytic solution (300 µL) is poured thereinto. As the electrolytic solution, a liquid is used in which LiPF ₆ is dissolved at a ratio of 1.0 mol/l in a mixed solution of ethylene carbonate, dimethyl carbonate, and ethyl methyl carbonate mixed in a ratio (volume ratio) of 30:35:35.

Next, metal lithium is used as a negative electrode, and the negative electrode is placed on an upper side of the separator, covered with an upper lid via a gasket and caulked with a caulking machine, thereby producing a lithium secondary battery (coin type half cell R2032).

### 2. Charge and Discharge Test

The lithium secondary battery prepared by the above-described method is used to carry out the following test as described in (Measurement Method).

### (Measurement Method)

First, the lithium secondary battery prepared as described above is left to stand at room temperature for 12 hours to sufficiently impregnate the separator and a positive electrode mixture layer with an electrolytic solution.

Next, at a testing temperature of 25°C, a set current value is set to 0.2CA for both charging and discharging, and each of constant-current constant-voltage charging and constant-current discharging is performed. A maximum charge voltage is set to 4.3V, and a minimum discharge voltage is set to 2.5V. A charge capacity is measured, and the obtained value is defined as an "initial charge capacity" (mAh/g). A discharge capacity is measured, and the obtained value is defined as an "initial discharge capacity" (mAh/g).

Then, the initial charge and discharge efficiency is calculated by Expression (a) using the obtained value of the initial discharge capacity and the obtained value of the initial charge capacity. Initial charge and discharge efficiency (%) = initial discharge capacity (mAh/g) / initial charge capacity (mAh/g) × 100

### <Metal Composite Compound>

The MCC contains at least Ni. An example of the MCC is a hexagonal compound having a layered structure. Examples of the MCC include a metal composite oxide, a metal composite hydroxide, and a mixture thereof. The metal composite hydroxide may also include a partially oxidized compound.

One aspect of the MCC is a secondary particle which is an aggregate of primary particles.

The MCC may further contain element M1 and element M2. Element M1 is one or more elements selected from the group consisting of Co, Mn, and Al, and element M2 is one or more elements selected from the group consisting of Fe, Cu, Ti, Mg, Zn, Sn, Zr, Nb, Ga, W, Mo, B, and Si.

### [Method of Acquiring Differential Pore Volume Distribution]

The "differential pore volume distribution" is obtained by analyzing a nitrogen adsorption isotherm obtained by measuring the MCC powder at a liquid nitrogen temperature by the Barrett-Joyner-Halenda (BJH) method. As a device for measuring the nitrogen adsorption isotherm, for example, an automatic specific surface area/pore distribution measuring device (Tristar II 3020, manufactured by Shimadzu Corporation) can be used.

First, 1 g of the MCC powder is subjected to a nitrogen degassing treatment at 105°C for 30 minutes using a degassing device (VacPrep061, manufactured by Shimadzu Corporation). After the treatment, the amount of nitrogen adsorbed at the liquid nitrogen temperature (77 K) of the MCC powder is measured using the above-described measuring device, and a nitrogen adsorption isotherm is created.

The nitrogen adsorption isotherm is plotted with a horizontal axis as a ratio (relative pressure (ρ/ρ0)) of an adsorption equilibrium pressure to a saturated vapor pressure and a vertical axis as an adsorption amount (cm³ (STP)/g) of gaseous nitrogen in a standard state (STP; Standard Temperature and Pressure).

The obtained nitrogen adsorption isotherm is analyzed by the BJH method to obtain a differential pore volume distribution in a region where the pore diameter is 200 nm or less. The differential pore volume distribution is plotted with the horizontal axis as the pore diameter (nm) and the vertical axis as the differential pore volume (cm³/g).

In the differential pore volume distribution obtained by the above-described method, an integrated area of a region where the pore diameter is 1 to 50 nm is denoted as A, and an integrated area of a region where the pore diameter is more than 50 nm and 200 nm or less is denoted as B.

A/B of the MCC is 0.05 or more and less than 1.5. A/B is preferably 1.3 or less, more preferably 1.2 or less, and still more preferably 1.0 or less.

In addition, A/B is preferably 0.07 or more and more preferably 0.10 or more.

The above-described upper limit and lower limit of A/B can be arbitrarily combined. A/B is preferably 0.07 to 1.3, more preferably 0.10 to 1.2, and still more preferably 0.10 to 1.0.

The MCC in which A/B satisfies the above range has a variation in the pore diameter, and thus the pore distribution is non-uniform. In such a case, in a case where the MCC is mixed with a lithium compound, the lithium compound easily penetrates the particles, and in a case where a mixture of the MCC and the lithium compound is calcined, a reaction between the MCC and the lithium compound easily occurs uniformly on the surface and inside the MCC. As a result, a CAM in which Li is uniformly present from the center of each of the particles to the vicinity of the surface is obtained. The capacity of the CAM in which Li is uniformly present in the particles is easily increased, and a lithium secondary battery having high initial charge and discharge efficiency can be produced.

A is preferably 0.3 or more and more preferably 0.4 or more. A is preferably 5.0 or less, more preferably 4.0 or less, and still more preferably 3.0 or less. The lower and upper limit values of A can be arbitrarily combined. A is preferably 0.3 to 5.0, more preferably 0.4 to 4.0, and still more preferably 0.4 to 3.0. In a case where A is in the above range, the initial charge and discharge efficiency can be further increased.

B is preferably 0.5 or more and more preferably 1.0 or more. B is preferably 15.0 or less and more preferably 12.0 or less. The lower and upper limit values of B can be arbitrarily combined. B is preferably 0.5 to 15.0 and more preferably 1.0 to 12.0.

In a case where B is in the above range, the initial charge and discharge efficiency can be further increased.

The differential pore volume distribution of the MCC in which A/B satisfies the above range has a broad peak.

It is preferable that the MCC have two or more maximum points in a region where the pore diameter is 20 to 150 nm in the differential pore volume distribution. The maximum point is a point at which the differential coefficient changes from positive to negative in the distribution curve of the differential pore volume distribution. As the distribution curve of the differential pore volume distribution, a distribution curve in which there are 30 or more plots of the differential pore volume in a region where the pore diameter is 200 nm or less is used.

The number of maximum points in the region where the pore diameter is 20 to 150 nm is preferably 3 or more. In addition, the number of maximum points in the region where the pore diameter is 20 to 150 nm is preferably 5 or less and more preferably 4 or less.

The number of maximum points in the region where the pore diameter is 20 to 150 nm is preferably 2 to 5 and more preferably 3 to 4.

Under the condition where A/B satisfies the above range, the MCC in which the maximum point in the region where the pore diameter is 20 to 150 nm satisfies the above range has more variation in the pore diameter, and thus the pore distribution is less uniform. In such an MCC, the lithium compound easily penetrates the particles, and thus a lithium secondary battery having higher initial charge and discharge efficiency can be produced.

It is preferable that the MCC have one or more maximum points in the region where the pore diameter is 20 to 50 nm and one or more maximum points in the region where the pore diameter is more than 50 nm and 200 nm or less in the differential pore volume distribution.

The number of maximum points in the region where the pore diameter is 20 to 50 nm is preferably 1 to 3 and still more preferably 1 or 2.

The number of maximum points in the region where the pore diameter is more than 50 nm and 200 nm or less is preferably 1 to 4 points and still more preferably 2 or 3 points.

Under the condition where A/B satisfies the above range, the MCC in which the maximum point in the region where the pore diameter is 20 to 50 nm, and the region where the pore diameter is more than 50 nm and 200 nm or less satisfies the above range has a variation in the pore diameter, and the lithium compound more easily penetrates the particles. As a result, a lithium secondary battery having higher initial charge and discharge efficiency can be produced.

Among the maximum points present in the differential pore volume distribution of the MCC, a value X of the differential pore volume of a first maximum point, which has the maximum differential pore volume, is preferably 0.15 cm³/g or less, more preferably 0.12 cm³/g or less, and still more preferably 0.10 cm³/g or less.

The lower limit value of X is preferably 0.01 cm³/g or more and more preferably 0.02 cm³/g or more.

The lower limit and upper limit values of X can be arbitrarily combined. X is preferably 0.01 to 0.15 cm³/g, more preferably 0.02 to 0.12 cm³/g, and still more preferably 0.02 to 0.10 cm³/g.

Under the condition where A/B satisfies the above-described range, in the MCC in which X satisfies the above range, the number of pores having a specific pore diameter is not excessive, and thus there is more variation in the pore diameter. In such an MCC, the lithium compound easily penetrates the particles, and thus a lithium secondary battery having higher initial charge and discharge efficiency can be produced

Among the maximum points present in the differential pore volume distribution, X/Y, which is a ratio of X to Y, which is a value of a differential pore volume of a second maximum point having the next largest differential pore volume after the first maximum point, is preferably 7 or less and more preferably 5 or less. X/Y is preferably 1 or more. The above-described lower limit and upper limit values of X/Y can be arbitrarily combined. X/Y is preferably 1 to 7 and more preferably 1 to 5.

This means that under the condition where A/B satisfies the above range, the MCC in which X/Y satisfies the above range has more variation in the pore diameter. In such an MCC, the lithium compound easily penetrates the particles, and thus a lithium secondary battery having higher initial charge and discharge efficiency can be produced.

It is preferable that the MCC be represented by Formula (I).

Ni_{(1-x-y)}M1ₓM2_{y}O_{z}(OH)_{2-α} ... (I)

(In Formula (I), 0 ≤ x ≤ 0.8, 0 ≤ y ≤ 0.2, 0 ≤ x + y < 1,0 ≤ z ≤ 3, -0.5 ≤ α ≤ 2, and α - z < 2, M1 is one or more elements selected from the group consisting of Co, Mn, and Al, and M2 is one or more elements selected from the group consisting of Fe, Cu, Ti, Mg, Zn, Sn, Zr, Nb, Ga, W, Mo, B, and Si.)

(x)

x is preferably 0.05 or more and more preferably 0.10 or more.

x is preferably 0.5 or less, more preferably 0.4 or less, and still more preferably 0.3 or less.

The lower and upper limit values of x can be arbitrarily combined. From the viewpoint of improving the initial charge and discharge efficiency of the battery, x is preferably 0 to 0.5, more preferably 0.05 to 0.4, and still more preferably 0.10 to 0.3.

(y)

y is preferably 0.15 or less, more preferably 0.1 or less, and still more preferably 0.05 or less.

The lower and upper limit values of y can be arbitrarily combined. From the viewpoint of improving the initial charge and discharge efficiency of the battery, y is preferably 0 to 0.15, more preferably 0 to 0.1, and still more preferably 0 to 0.05.

(x + y)

x + y is preferably more than 0, more preferably 0.03 or more, and still more preferably 0.05 or more.

x + y is preferably 0.7 or less, more preferably 0.6 or less, still more preferably 0.4 or less, and particularly preferably 0.3 or less.

The lower and upper limit values of x + y can be arbitrarily combined. From the viewpoint of improving the initial charge and discharge efficiency of the battery, x + y is preferably more than 0 and 0.7 or less, more preferably more than 0 and 0.6 or less, still more preferably 0.03 to 0.4, and particularly preferably 0.05 to 0.3.

From the viewpoint of improving the initial charge and discharge efficiency of the battery, Formula (I) preferably satisfies 0 < x + y ≤ 0.6.

From the viewpoint of obtaining a lithium secondary battery having high initial charge and discharge efficiency, element M2 is preferably one or more elements selected from the group consisting of Ti, Mg, W, Nb, and Zr.

### [Composition Analysis]

The composition of the MCC is measured by dissolving the MCC in hydrochloric acid and then using an ICP emission spectrometer. As the ICP emission spectrometer, for example, Optima 8300 manufactured by Perkin Elmer Inc. can be used.

### <<Method of Producing MCC>>

The MCC can be produced by a batch type coprecipitation method or a continuous coprecipitation method. Hereinafter, the method of producing the metal composite hydroxide containing Ni and element M1 will be described in detail using the metal composite hydroxide as an example.

First, as an example, a nickel salt solution, a metal salt solution of element M1, an alkaline aqueous solution, and, as necessary, a complexing agent are mixed in a reaction tank by a coprecipitation method, particularly a continuous coprecipitation method described in JP-A-2002-201028, to produce a metal composite hydroxide containing Ni and element M1.

As the nickel salt, which is a solute of the nickel salt solution, for example, one or more of nickel sulfate, nickel nitrate, nickel chloride, and nickel acetate can be used.

As the metal salt which is the solute of the metal salt solution of element M1, for example, cobalt sulfate, cobalt nitrate, cobalt chloride, cobalt acetate, manganese sulfate, manganese nitrate, manganese chloride, manganese acetate, aluminum sulfate, and soda aluminate can be used.

The above metal salts are used at ratios corresponding to the composition ratio of Formula (I). In addition, as the solvent, water is used.

In a case where the nickel salt solution, the metal salt solution of element M1, the alkaline aqueous solution, and, as necessary, the complexing agent are continuously supplied to the reaction tank, Ni and element M1 react with each other to generate a nucleus of a crystal of Ni₍₁₋ₓ₎M1ₓ(OH)_{2-α}. Further, the nuclei grow by continuously supplying these raw materials. In this case, the nickel salt solution and the metal salt solution of element M1 may be mixed to prepare a mixed solution before being supplied to the reaction tank, and the mixed solution may be supplied to the reaction tank. In addition, the nickel salt solution, the metal salt solution of element M1, and the mixed solution may each be supplied to the reaction tank from a plurality of supply ports.

The complexing agent is a compound capable of forming a complex with ions of Ni and element M1 in aqueous solutions. Examples thereof include an ammonium ion feeder, hydrazine, ethylenediaminetetraacetic acid, nitrilotriacetic acid, uracil diacetic acid, and glycine.

As the ammonium ion feeder, ammonium salts such as ammonium hydroxide, ammonium sulfate, ammonium chloride, ammonium carbonate and ammonium fluoride are exemplary examples.

The complexing agent need not be contained. In a case where the complexing agent is contained, regarding the amount of the complexing agent contained in the mixed solution containing the nickel salt solution, the metal salt solution of element M1, and the complexing agent, for example, a molar ratio to the total number of moles of the nickel salt and the metal salt of element M1 in the mixed solution is more than 0 and 2.0 or less.

In the coprecipitation method, in order to adjust the pH value of the mixed solution, an alkaline aqueous solution is supplied to the mixed solution before the pH of the mixed solution becomes neutral from alkaline. Examples of the alkaline aqueous solution include a sodium hydroxide aqueous solution and a potassium hydroxide aqueous solution.

The pH value in the present specification is defined as a value measured when the temperature of the mixed solution is 40°C. In a case where the temperature of the mixed solution sampled from the reaction tank is not 40°C, the mixed solution is heated or cooled to 40°C, and then the pH is measured.

In the reaction, the temperature of the liquid raw material supplied to the reaction tank is controlled to be in a predetermined range.

Liquid raw material refers to the nickel salt solution, the metal salt solution of element M1, or the mixed solution supplied to the reaction tank.

In the reaction, the temperature of the liquid raw material is adjusted to 10°C to 40°C. In a case where a plurality of kinds of liquid raw materials are used, the temperature of each of the liquid raw materials may be the same or different from each other as long as the temperature is in the above temperature range.

Further, the temperature of the reaction tank is adjusted to 70°C or higher, preferably in a range of 70°C to 75°C.

In addition, the temperature of the reaction tank and the temperature of the liquid raw material are adjusted such that a temperature difference between the temperature of the reaction tank and the temperature of the liquid raw material is 30°C or more.

By adjusting the temperature of the reaction tank to be in the above range and carrying out the reaction under the condition where the temperature of the reaction vessel and the temperature of the liquid raw material is adjusted to have a temperature difference of 30°C or more, the solubility of the metal salt contained in the liquid raw material supplied to the reaction tank is improved, and the crystals are less likely to be precipitated. As a result, under the above-described temperature difference condition, the nucleus growth rate is likely to be higher than the nucleus generation rate. Under such conditions, there is a variation in the size of the primary particles, and there is also a variation in the size of the pores to be formed in a case where the primary particles are aggregated. As a result, the MCC in which A/B is in the above-described range is obtained. In addition, by carrying out the reaction under such conditions, the MCC in which the number of maximum points of the pore diameter in each range, X, and X/Y are in the above-described ranges can be obtained.

In this case, it is preferable that the reaction be carried out under the condition where the total flow rate (L/h) of the liquid raw material supplied to the reaction tank to the volume (L) of the reaction tank is 0.10 or less. By supplying the liquid raw material so that the amount falls in the above-described range, even in a case where a liquid raw material having a temperature significantly different from the temperature of the reaction tank is supplied to the reaction tank, the temperature of the liquid in the reaction tank after the supply is less likely to deviate from the temperature of the reaction tank. Therefore, it is possible to maintain a temperature difference of 30°C or more between the temperature of the reaction tank and the temperature of the liquid raw material. In this case, in a case where a plurality of kinds of liquid raw materials are supplied from a plurality of supply ports to the reaction tank, the total flow rate (L/h) of the liquid raw materials supplied to the reaction tank refers to the sum of the flow rates (L/h) of all the liquid raw materials supplied to the reaction tank. For example, in a case where a mixed solution V consisting of a nickel salt and a metal salt of one element M1, and a metal salt solution W of another element M1 are each supplied to a reaction tank from two supply ports, the total flow rate of the liquid raw material supplied to the reaction tank is the sum of flow rates of the mixed solution V and the metal salt solution W.

In addition, in the reaction, the pH value of the mixed solution in the reaction tank is controlled in a range of 9 to 13, preferably 10.5 to 13.

The materials in the reaction tank are appropriately stirred and mixed together.

As the reaction tank that is used in the continuous coprecipitation method, it is possible to use a type of reaction tank in which the formed reaction precipitate is caused to overflow for separation.

In order to control the atmosphere in the reaction tank to a desired atmosphere, a predetermined gas may be allowed to pass through the reaction tank, or a liquid present in the reaction tank may be directly bubbled.

After the above reaction, the obtained reaction precipitate is washed with water and then isolated. For the isolation, for example, a method of dewatering a slurry containing the reaction precipitate by centrifugal separation, suction filtration, or the like is used.

The isolated reaction precipitate is washed, dewatered, dried, and sieved as necessary, and thus a metal composite hydroxide is obtained. After drying, classification may be appropriately performed.

It is preferable that the reaction precipitate be washed with water, a weak aqueous acid, a washing liquid such as an alkaline washing liquid, or the like. As the washing liquid, an alkaline washing liquid is preferable, and a sodium hydroxide aqueous solution or a potassium hydroxide aqueous solution is more preferable.

It is preferable to wash the reaction precipitate with a washing liquid in an amount at least 10 times the mass of the reaction precipitate. In addition, the temperature of the washing liquid to be used is preferably 30°C or higher. Further, it is preferable that the washing be carried out one or more times.

It is preferable that after washing with a washing liquid other than water, washing be further carried out with water so that a compound derived from the washing liquid does not remain in the reaction precipitate.

The drying temperature is preferably 80°C to 250°C and more preferably 90°C to 230°C. The drying time is preferably 0.5 to 30 hours and more preferably 1 to 25 hours. The drying pressure may be atmospheric pressure or reduced pressure.

In a case where a metal composite oxide is produced as the MCC, the metal composite oxide can be obtained by heating a metal composite hydroxide. If necessary, a plurality of heating steps may be performed. The heating temperature in the present specification means a set temperature of a heating device. In the case of having a plurality of heating steps, the heating temperature means the temperature when the metal composite hydroxide is heated at the highest holding temperature among individual heating steps.

The heating temperature is, for example, 300°C to 700°C, preferably 400°C to 700°C, and more preferably 450°C to 680°C.

The time during which the metal composite hydroxide is held at the heating temperature is, for example, 0.1 to 20 hours and preferably 0.5 to 10 hours. The temperature rising rate to the heating temperature is, for example, 50 to 400 °C/hour. In addition, as the heating atmosphere, it is possible to use an air, oxygen, nitrogen, argon, or a mixed gas thereof.

### <Method for Producing Positive Electrode Active Material for Lithium Secondary Battery>

The CAM can be produced using the above-described MCC as a raw material.

The method of producing the CAM has a calcining step of calcining a mixture of the MCC and a lithium compound. The method of producing the CAM may have a mixing step of mixing the MCC and a lithium compound before the calcining step, or may have a washing step of washing the obtained calcined product after the calcining step.

### [Mixing Step]

The MCC and a lithium compound are mixed together.

As the lithium compound, one or more selected from the group consisting of lithium carbonate, lithium hydroxide, and lithium hydroxide monohydrate can be used.

The lithium compound and the MCC are mixed in consideration of a composition ratio of a final target product to obtain a mixture of the lithium compound and the MCC. The amount (molar ratio) of Li contained in the lithium compound with respect to the total amount 1 of the elements other than the oxygen atom contained in the MCC is preferably 0.96 to 1.20, more preferably 0.98 to 1.18, and still more preferably 1.00 to 1.16.

### [Calcining Step]

The obtained mixture is calcined. By calcining the mixture, the crystals of CAM grow. The calcining step may have a plurality of calcining stages having different calcining temperatures.

The calcining temperature in the present specification is a temperature of an atmosphere in a calcining furnace and means the highest temperature of the holding temperatures (highest holding temperature).

In a case where the calcining step includes a plurality of calcining stages, the calcining temperature means the temperature of a stage in which calcining is performed at the highest holding temperature among the stages.

The calcining temperature is preferably 400°C to 1,000°C, more preferably 500°C to 980°C, and still more preferably 600°C to 960°C.

In addition, examples of the time for which the calcining temperature is held include 0.1 to 30 hours, and the time is preferably 0.5 to 20 hours.

In the calcining step, calcining is preferably performed in an oxygen-containing atmosphere. Specifically, it is preferable to introduce oxygen gas to create an oxygen-containing atmosphere in the calcining furnace.

### [Washing Step]

In the present embodiment, the calcined product may be washed with pure water or a washing liquid such as an alkaline washing liquid. The calcined product after washing may be appropriately dried.

The calcined product that has been appropriately washed and dried may be appropriately crushed and sieved.

By the above steps, a CAM is obtained.

According to the MCC having the above-described configuration, a CAM capable of increasing the initial charge and discharge efficiency of a lithium secondary battery can be produced.

In addition, according to the above-described method of producing the CAM, by using the above-described MCC as a raw material, a CAM capable of increasing the initial charge and discharge efficiency of a lithium secondary battery can be obtained.

### <Lithium Secondary Battery>

A positive electrode for a lithium secondary battery which is suitable in a case where CAM is used will be described. Hereinafter, the positive electrode for a lithium secondary battery will be referred to as a positive electrode in some cases.

Furthermore, a lithium secondary battery that is suitable for an application of a positive electrode will be described.

An example of the lithium secondary battery suitable for a case in which the CAM is used has a positive electrode, a negative electrode, a separator interposed between the positive electrode and the negative electrode, and an electrolytic solution disposed between the positive electrode and the negative electrode.

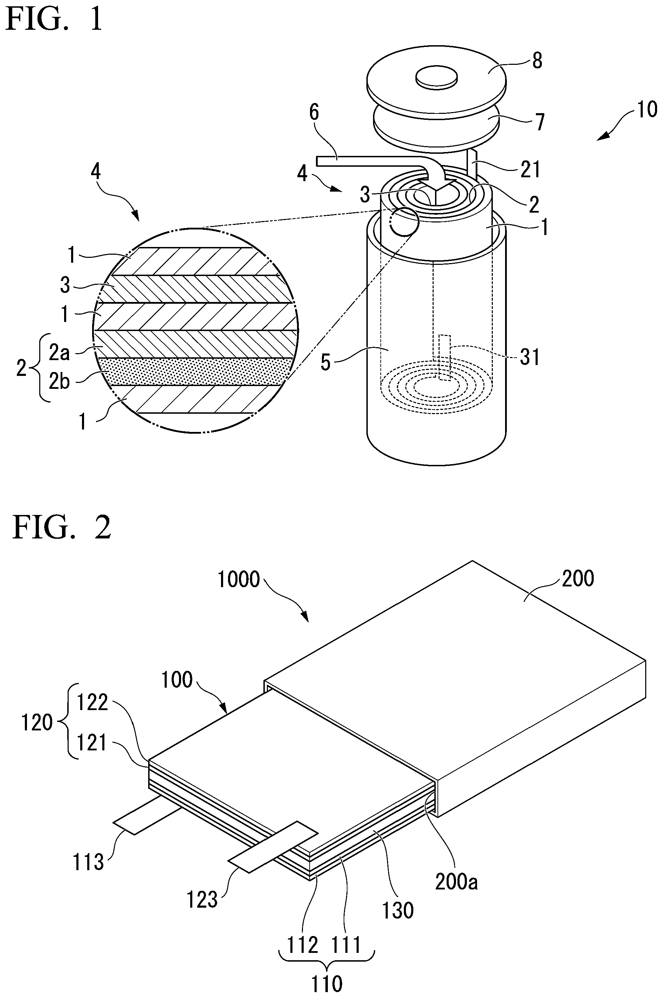

FIG. 1 is a schematic view showing the example of the lithium secondary battery. For example, a cylindrical lithium secondary battery 10 is produced as described below.

First, as shown in a partially enlarged view of FIG. 1, a pair of separators 1 having a strip shape, a strip-shaped positive electrode 2 having a positive electrode lead 21 at one end, and a strip-shaped negative electrode 3 having a negative electrode lead 31 at one end are stacked in order of the separator 1, the positive electrode 2, the separator 1, and the negative electrode 3 and are wound to form an electrode group 4.

The positive electrode 2 includes, for example, a positive electrode active material layer 2a containing the CAM and a positive electrode current collector 2b having the positive electrode active material layer 2a formed on one surface thereof. The positive electrode 2 can be produced by first preparing a positive electrode mixture containing the CAM, a conductive material, and a binder, and supporting the positive electrode mixture on one surface of the positive electrode current collector 2b to form a positive electrode active material layer 2a.

Examples of the negative electrode 3 include an electrode in which a negative electrode mixture containing a negative electrode active material (not shown) is supported on a negative electrode current collector, and an electrode consisting of a negative electrode active material alone, and the negative electrode 3 can be produced in a manner similar to that for the positive electrode 2.

Next, the electrode group 4 and an insulator (not shown) are accommodated in a battery can 5, a can bottom is then sealed, the electrode group 4 is impregnated with an electrolytic solution 6, and an electrolyte is disposed between the positive electrode 2 and the negative electrode 3. Furthermore, an upper portion of the battery can 5 is sealed with a top insulator 7 and a sealing body 8, and thus the lithium secondary battery 10 can be produced.

Examples of a shape of the electrode group 4 include a columnar shape in which a cross-sectional shape when the electrode group 4 is cut in a direction perpendicular to a winding axis becomes a circle, an ellipse, a rectangle, or a rectangle with rounded corners.

In addition, as the shape of the lithium secondary battery having the electrode group 4, a shape defined by IEC60086, which is a standard for a battery defined by the International Electrotechnical Commission (IEC), or by JIS C 8500, can be adopted. Examples thereof include shapes such as a cylindrical shape or a square shape.

Furthermore, the lithium secondary battery is not limited to the wound type configuration, and may have a stacked type configuration in which a stacked structure of a positive electrode, a separator, a negative electrode, and a separator is repeatedly stacked. A so-called coin type battery, a button type battery, and a paper type (or sheet type) battery are exemplary examples of the stacked type lithium secondary battery.

For the positive electrode, the separator, the negative electrode, and the electrolytic solution constituting the lithium secondary battery, for example, the configurations, materials, and production methods described in [0113] to [0140] of WO2022/113904A1 can be used.

### <All-Solid-State Lithium Secondary Battery>

The CAM can be used as a CAM of an all-solid-state lithium secondary battery.

FIG. 2 is a schematic view showing an example of the all-solid-state lithium secondary battery. An all-solid-state lithium secondary battery 1000 shown in FIG. 2 has a laminate 100 having a positive electrode 110, a negative electrode 120, and a solid electrolyte layer 130, and an exterior body 200 accommodating the laminate 100. In addition, the all-solid-state lithium secondary battery 1000 may have a bipolar structure in which a CAM and a negative electrode active material are disposed on both sides of a current collector. As specific examples of the bipolar structure, for example, the structures described in JP-A-2004-95400 are exemplary examples.

The positive electrode 110 has a positive electrode active material layer 111 and a positive electrode current collector 112. The positive electrode active material layer 111 contains the CAM and a solid electrolyte. In addition, the positive electrode active material layer 111 may contain a conductive material and a binder.

The negative electrode 120 has a negative electrode active material layer 121 and a negative electrode current collector 122. The negative electrode active material layer 121 contains a negative electrode active material. In addition, the negative electrode active material layer 121 may contain a solid electrolyte and a conductive material.

The laminate 100 may have an external terminal 113 that is connected to the positive electrode current collector 112 and an external terminal 123 that is connected to the negative electrode current collector 122. In addition, the all-solid-state lithium secondary battery 1000 may have a separator between the positive electrode 110 and the negative electrode 120.

The all-solid-state lithium secondary battery 1000 further has an insulator (not shown) that insulates the laminate 100 and the exterior body 200 from each other and a sealant (not shown) that seals an opening portion 200a of the exterior body 200.

As the exterior body 200, a container formed of a highly corrosion-resistant metal material such as aluminum, stainless steel, or nickel-plated steel can be used. In addition, as the exterior body 200, a container obtained by processing a laminate film having at least one surface subjected to a corrosion resistant process into a bag shape can also be used.

Example of a shape of the all-solid-state lithium secondary battery 1000 include shapes such as a coin type, a button type, a paper type (or a sheet type), a cylindrical type, a square type, and a laminate type (pouch type).

As an example of the all-solid-state lithium secondary battery 1000, a form in which one laminate 100 is provided is shown in the drawings, but the present embodiment is not limited thereto. The all-solid-state lithium secondary battery 1000 may have a configuration in which the laminate 100 is used as a unit cell and a plurality of unit cells (laminates 100) are sealed inside the exterior body 200.

For the all-solid-state lithium secondary battery, for example, the configurations, materials, and production methods described in [0151] to [0181] of WO2022/113904A1 can be used.

The present invention includes the following [11] to [18].
[11] An MCC containing at least Ni, in which A/B is 0.10 to 1.2.
[12] The MCC according to [11], in which a differential pore volume distribution, the MCC has two or more maximum points in a region where a pore diameter is 20 to 150 nm.
[13] The MCC according to [11] or [12], in which in the differential pore volume distribution, the MCC has one or more maximum points in a region where a pore diameter is 20 to 50 nm and has one or more maximum points in a region where the pore diameter is more than 50 nm and 200 nm or less.
[14] The MCC according to any one of [11] to [13], in which X is 0.02 to 0.12 cm³/g or less.
[15] The MCC according to any one of [11] to [14], in which X/Y is 1 to 5.
[16] The MCC according to any one of [11] to [15], in which the MCC is represented by Formula (I).
[17] The MCC according to [16], in which Formula (I) satisfies 0 < x + y ≤ 0.6.
[18] A method of producing a CAM, including: a step of calcining a mixture of the MCC according to any one of [11] to [17] and a lithium compound.

As described above, although preferred examples of the embodiments according to the present invention have been described with reference to the accompanying drawings, the present invention is not limited to such examples. The shapes, combinations, and the like of the respective components described in the above-described embodiments are examples, and can be modified in various ways on the basis of design requirements and the like without departing from the scope of the present invention.

### Examples

Next, the present invention will be described in more detail with reference to examples.

### <Composition Analysis>

The composition of the MCC was analyzed by the method described in [Composition Analysis] .

<Acquisition of Differential Pore Volume Distribution>

As described in [Method of Acquiring Differential Pore Volume Distribution], the differential pore volume distribution of the MCC was acquired, and the values of A and B and the position of the maximum point defined above were obtained. From the obtained values, A/B, the number of maximum points of the pore diameter in each range, X, and X/Y were obtained.

### <Measurement of Initial Charge and Discharge Efficiency>

The initial charge and discharge efficiency was measured according to the method described in [Measurement of Initial Charge and Discharge Efficiency] described above.

### <Example 1>

After water was added to a reaction tank provided with a rotating type stirrer having a stirring blade and an overflow pipe, a sodium hydroxide aqueous solution was supplied thereto, and the liquid temperature was held at 70°C (set temperature of the reaction tank).

A nickel sulfate aqueous solution, a cobalt sulfate aqueous solution, and a manganese sulfate aqueous solution were mixed so that a molar ratio of Ni:Co:Mn was 83.0:12.1:4.9, and a mixed solution was held at 25°C (the temperature of the liquid raw material).

Next, the mixed solution was continuously supplied to the reaction tank under stirring so that the total flow rate (L/h) of the mixed solution with respect to the volume (L) of the reaction tank was 0.10 or less, and at the same time, an ammonium sulfate aqueous solution was continuously supplied as a complexing agent. At this time, while holding the liquid temperature at 70°C (the temperature of the reaction tank), a sodium hydroxide aqueous solution was added dropwise as appropriate so that the pH of the mixed solution in the reaction tank was 11.2 (measurement temperature: 40°C), and thus a reaction precipitate 1 was obtained.

The reaction precipitate 1 was washed with a sodium hydroxide aqueous solution (sodium hydroxide concentration: 5% by mass) having a mass of 20 times the mass of the reaction precipitate 1. After washing, the precipitate was dewatered by filter pressing, washed with water, dewatered, isolated, and then dried at 105°C for 20 hours to obtain a metal composite hydroxide 1. In a case where the composition of the metal composite hydroxide 1 was that of Formula (I), x was 0.17, y was 0, and M1 was Co and Mn.

### <Example 2>

After water was added to a reaction tank provided with a rotating type stirrer having a stirring blade and an overflow pipe, a sodium hydroxide aqueous solution was supplied thereto, and the liquid temperature was held at 70°C (set temperature of the reaction tank).

A nickel sulfate aqueous solution, a manganese sulfate aqueous solution, and an aluminum sulfate aqueous solution were mixed so that a molar ratio of Ni:Mn:Al was 93.0:1.0:6.0, and the mixed solution was held at 25°C (the temperature of the liquid raw material).

Next, the mixed solution was continuously supplied to the reaction tank under stirring so that the total flow rate (L/h) of the mixed solution with respect to the volume (L) of the reaction tank was 0.10 or less, and at the same time, an ammonium sulfate aqueous solution was continuously supplied as a complexing agent. At this time, while holding the liquid temperature at 70°C (the temperature of the reaction tank), a sodium hydroxide aqueous solution was added dropwise as appropriate so that the pH of the mixed solution in the reaction tank was 10.8 (measurement temperature: 40°C), and thus a reaction precipitate 2 was obtained.

The reaction precipitate 2 was washed with a sodium hydroxide aqueous solution (sodium hydroxide concentration: 5% by mass) having a mass of 20 times the mass of the reaction precipitate 2. After washing, the precipitate was dewatered by filter pressing, washed with water, dewatered, isolated, and then dried at 125°C for 24 hours to obtain a metal composite hydroxide 2. In a case where the composition of the metal composite hydroxide 2 was that of Formula (I), x was 0.07, y was 0, and M1 was Mn and Al.

### <Example 3>

After water was added to a reaction tank provided with a rotating type stirrer having a stirring blade and an overflow pipe, a sodium hydroxide aqueous solution was supplied thereto, and the liquid temperature was held at 70°C (set temperature of the reaction tank).

A nickel sulfate aqueous solution, a cobalt sulfate aqueous solution, and a manganese sulfate aqueous solution were mixed so that a molar ratio of Ni:Co:Mn was 82.5:5.1:12.4, and the mixed solution was held at 25°C (the temperature of the liquid raw material).

Next, the mixed solution was continuously supplied to the reaction tank under stirring so that the total flow rate (L/h) of the mixed solution with respect to the volume (L) of the reaction tank was 0.10 or less, and at the same time, an ammonium sulfate aqueous solution was continuously supplied as a complexing agent. At this time, while holding the liquid temperature at 70°C (the temperature of the reaction tank), a sodium hydroxide aqueous solution was added dropwise as appropriate so that the pH of the mixed solution in the reaction tank was 11.1 (measurement temperature: 40°C), and thus a reaction precipitate 3 was obtained.

A metal composite hydroxide 3 was obtained in the same manner as in Example 1 except that the reaction precipitate 3 was used instead of the reaction precipitate 1. In a case where the composition of the metal composite hydroxide 3 was that of Formula (I), x was 0.18, y was 0, and M1 was Co and Mn.

### <Example 4>

After water was added to a reaction tank provided with a rotating type stirrer having a stirring blade and an overflow pipe, a sodium hydroxide aqueous solution was supplied thereto, and the liquid temperature was held at 70°C (the temperature of the reaction tank).

A nickel sulfate aqueous solution, a cobalt sulfate aqueous solution, and an aluminum sulfate aqueous solution were mixed so that a molar ratio of Ni:Co:Al was 88.0:9.0:3.0, and the mixed solution was held at 35°C (the temperature of the liquid raw material).

Next, the mixed solution was continuously supplied to the reaction tank under stirring so that the total flow rate (L/h) of the mixed solution with respect to the volume (L) of the reaction tank was 0.10 or less, and at the same time, an ammonium sulfate aqueous solution was continuously supplied as a complexing agent. At this time, while holding the liquid temperature at 70°C (the temperature of the reaction tank), a sodium hydroxide aqueous solution was added dropwise as appropriate so that the pH of the mixed solution in the reaction tank was 11.5 (measurement temperature: 40°C), and thus a reaction precipitate 4 was obtained.

A metal composite hydroxide 4 was obtained in the same manner as in Example 2 except that the reaction precipitate 4 was used instead of the reaction precipitate 2. In a case where the composition of the metal composite hydroxide 4 was that of Formula (I), x was 0.12, y was 0, and M1 was Co and Al.

### <Comparative Example 1>

After water was added to a reaction tank provided with a rotating type stirrer having a stirring blade and an overflow pipe, a sodium hydroxide aqueous solution was supplied, and the liquid temperature was held at 45°C (the temperature of the reaction tank).

A nickel sulfate aqueous solution, a manganese sulfate aqueous solution, and an aluminum sulfate aqueous solution were mixed so that a molar ratio of Ni:Mn:Al was 93.0:3.5:3.5, and the mixed solution was held at 25°C (the temperature of the liquid raw material).

Next, the mixed solution was continuously supplied to the reaction tank under stirring so that the total flow rate (L/h) of the mixed solution with respect to the volume (L) of the reaction tank was 0.10 or less, and at the same time, an ammonium sulfate aqueous solution was continuously supplied as a complexing agent. At this time, while holding the liquid temperature at 45°C (the temperature of the reaction tank), a sodium hydroxide aqueous solution was added dropwise as appropriate so that the pH of the mixed solution in the reaction tank was 12.0 (measurement temperature: 40°C), and thus a reaction precipitate 5 was obtained.

A metal composite hydroxide 5 was obtained in the same manner as in Example 2 except that the reaction precipitate 5 was used instead of the reaction precipitate 2. In a case where the composition of the metal composite hydroxide 5 was that of Formula (I), x was 0.07, y was 0, and M1 was Mn and Al.

### <Comparative Example 2>

After water was added to a reaction tank provided with a rotating type stirrer having a stirring blade and an overflow pipe, a sodium hydroxide aqueous solution was supplied, and the liquid temperature was held at 40°C (the temperature of the reaction tank).

A nickel sulfate aqueous solution, a cobalt sulfate aqueous solution, and a manganese sulfate aqueous solution were mixed so that a molar ratio of Ni:Co:Mn was 83.5:5.1:11.4, and the mixed solution was held at 25°C (the temperature of the liquid raw material).

Next, the mixed solution was continuously supplied to the reaction tank under stirring so that the total flow rate (L/h) of the mixed solution with respect to the volume (L) of the reaction tank was 0.10 or less, and at the same time, an ammonium sulfate aqueous solution was continuously supplied as a complexing agent. At this time, while holding the liquid temperature at 40°C (the temperature of the reaction tank), a sodium hydroxide aqueous solution was added dropwise as appropriate so that the pH of the mixed solution in the reaction tank was 10.6 (measurement temperature: 40°C), and thus a reaction precipitate 6 was obtained.

A metal composite hydroxide 6 was obtained in the same manner as in Example 2 except that the reaction precipitate 6 was used instead of the reaction precipitate 2. In a case where the composition of the metal composite hydroxide 6 was that of Formula (I), x was 0.17, y was 0, and M1 was Co and Mn.

**[Table 1]**

| | A | B | A/B | Number of maximum points | | | X (cm³/g) | X/Y | Initial charge and discharge efficiency (%) |
|---|---|---|---|---|---|---|---|---|---|
| | | | | 20 to 150 nm | 20 to 50 nm | More than 50 nm and 200 nm or less | | | |
| Example 1 | 0.71 | 1.68 | 0.42 | 3 | 1 | 2 | 0.017 | 1.04 | 88.2 |
| Example 2 | 2.20 | 11.84 | 0.19 | 4 | 1 | 3 | 0.099 | 1.33 | 88.0 |
| Example 3 | 1.20 | 1.97 | 0.61 | 3 | 1 | 2 | 0.037 | 1.69 | 88.4 |
| Example 4 | 3.61 | 3.32 | 1.09 | 2 | 1 | 1 | 0.115 | 1.53 | 86.5 |
| Comparative Example 1 | 1.36 | 0.47 | 2.89 | 1 | 0 | 1 | 0.103 | 25.2 | 79.0 |
| Comparative Example 2 | 5.31 | 2.61 | 2.03 | 2 | 1 | 1 | 0.186 | 11.1 | 81.2 |

In Table 1, A, B, A/B, the number of maximum points with the pore diameter in each range, X, and X/Y of the metal composite hydroxides of Examples 1 to 4 and Comparative Examples 1 and 2, and the value of the initial charge and discharge efficiency of the lithium secondary batteries produced by using the metal composite hydroxides as MCC are shown.

As shown in Table 1, the metal composite hydroxides of Examples 1 to 4 in which A/B was less than 1.5 had higher initial charge and discharge efficiency than the metal composite hydroxides of Comparative Examples 1 and 2.

Since the metal composite hydroxides of Examples 1 to 4 varied in pore diameter and had non-uniform pore distribution, it was considered that in a case of being mixed with a lithium compound, the lithium compound easily penetrates the particles, and in a case of being mixed with a lithium compound and calcining the mixture, a reaction between the MCC and the lithium compound occurs uniformly on the surface and inside the MCC. In addition, it is considered that the initial charge and discharge efficiency of the battery is high since the CAM in which Li is uniformly present from the center of each of the particles to the vicinity of the surface is obtained.

In the metal composite hydroxides of Comparative Examples 1 and 2, A/B was 1.5 or more, and the initial charge and discharge efficiency was lower than that of the metal composite hydroxides of Examples 1 to 4. It is considered that this was because the metal composite hydroxides of Comparative Examples 1 and 2 had many fine pores, the lithium compound was less likely to penetrate into the particles, and the CAM in which Li was present in an uneven manner as compared with Examples was obtained.

### EXPLANATION OF REFERENCES

1: separator
2: positive electrode
2a: positive electrode active material layer
2b: positive electrode current collector
3: negative electrode
4: electrode group
5: battery can
6: electrolytic solution
7: top insulator
8: sealing body
10: lithium secondary battery
21: positive electrode lead
31: negative electrode lead
100: laminate
110: positive electrode
111: positive electrode active material layer
112: positive electrode current collector
113: external terminal
120: negative electrode
121: negative electrode active material layer
122: negative electrode current collector
123: external terminal
130: solid electrolyte layer
200: exterior body
200a: opening portion
1000: all-solid-state lithium secondary battery

## Claims

1. A metal composite compound, comprising:
at least Ni,
wherein in the metal composite compound, when a differential pore volume distribution is determined by a Barrett-Joyner-Halenda method from a nitrogen gas adsorption isotherm, an integrated area of a region where a pore diameter is 1 nm or more and 50 nm or less is A, and an integrated area of a region where the pore diameter is more than 50 nm and 200 nm or less is B,
A/B is 0.05 or more and less than 1.5.

2. The metal composite compound according to Claim 1,
wherein in the differential pore volume distribution, the metal composite compound has two or more maximum points in a region where the pore diameter is 20 nm or more and 150 nm or less.

3. The metal composite compound according to Claim 1 or 2,
wherein in the differential pore volume distribution, the metal composite compound has one or more maximum points in a region where the pore diameter is 20 nm or more and 50 nm or less, and has one or more maximum points in a region where the pore diameter is more than 50 nm and 200 nm or less.

4. The metal composite compound according to any one of Claims 1 to 3,
wherein a value X of a differential pore volume of a first maximum point, which has a maximum differential pore volume among maximum points present in the differential pore volume distribution, is 0.15 cm³/g or less.

5. The metal composite compound according to any one of Claims 1 to 4,
wherein X/Y, which is a ratio of a value X of a differential pore volume of a first maximum point, which has a maximum differential pore volume among maximum points present in the differential pore volume distribution, to a value Y of a differential pore volume of a second maximum point, which has the next largest differential pore volume after the first maximum point, is 7 or less.

6. The metal composite compound according to any one of Claims 1 to 5, represented by Formula (I),
Ni_{(1-x-y)}M1ₓM2_{y}O_{z}(OH)_{2-α} ... (I)
(in Formula (I), 0 ≤ x ≤ 0.8, 0 ≤ y ≤ 0.2, 0 ≤ x + y < 1, 0 ≤ z ≤ 3, -0.5 ≤ α ≤ 2, and α - z < 2, M1 is one or more elements selected from the group consisting of Co, Mn, and Al, and M2 is one or more elements selected from the group consisting of Fe, Cu, Ti, Mg, Zn, Sn, Zr, Nb, Ga, W, Mo, B, and Si).

7. The metal composite compound according to Claim 6,
wherein Formula (I) satisfies 0 < x + y ≤ 0.6.

8. A method of producing a positive electrode active material for a lithium secondary battery, the method comprising:
a step of calcining a mixture of the metal composite compound according to any one of Claims 1 to 7 and a lithium compound.
